# EUROPÄISCHE PATENTSCHRIFT

(11) **EP 1 531 433 B1**
(45) Veröffentlichungstag und Bekanntmachung des Hinweises auf die Patenterteilung: **13.09.2006**
(21) Anmeldenummer: 04017846.9
(22) Anmeldetag: 28.07.2004
(51) Int. Cl.: G07F 7/06, B65G 25/06, B65G 25/08

(54) **Rücknahmeautomat für Behältnisse**
Reverse Vending Apparatus for Containers
Automate pour conteneurs consignes

(30) Priorität: 14.11.2003 DE 10353537; 02.07.2004 DE 102004032330
(43) Veröffentlichungstag der Anmeldung: 18.05.2005
(62) Teilanmeldung aus: 04022319.0
(73) Patentinhaber: Wincor Nixdorf International GmbH, 33106 Paderborn (DE)
(72) Erfinder: Lutz, Bernhard, 33129 Delbrück (DE)
(74) Vertreter: Schaumburg, Thoenes, Thurn, Landskron

(56) Entgegenhaltungen:
- EP-A- 1 167 247
- US-A- 4 151 908
- US-A- 5 934 440
- US-A1- 2003 187 546

## Beschreibung

Die Erfindung betrifft eine Vorrichtung für die Rücknahme von Behältern z.B. von Dosen und Flaschen aus Glas, Kunststoff oder Metall sowie eine Einheit für Rücknahmeautomaten für Behälter, wobei die Behälter mit Hilfe einer Fördereinrichtung in liegender Position zu einer Identifizierungseinrichtung transportiert werden, in der die charakteristischen Daten der Behälter erfasst werden. Insbesondere soll unterschieden werden, ob es sich um einen Einweg- oder einen Mehrwegbehälter handelt, da diese unterschiedlichen Weiterbehandlungseinrichtungen zugeführt werden.

Aus der DE 201 12 651 U1 ist eine Einheit für Behälter-Rücknahmeautomaten bekannt, die aus zwei endlosen Förderbändern besteht, die V-förmig angeordnet sind, so dass beispielsweise eine Flasche oder eine Dose auf diesen Förderbändern in Richtung ihrer Längsachse transportiert werden kann. Unterhalb der Förderbänder sind zwei Walzen angeordnet, die durch einen Drehantrieb antreibbar sind. Die Förderbänder können verschwenkt werden, so dass der Behälter auf die Walzen fällt und von diesen gedreht wird. Dabei erkennt ein oberhalb der Fördereinheit angebrachter Detektor einen Identifikationscode wie einen Barcode auf dem Behälter. Nach der Erkennung des Barcodes werden die Förderbänder wiederum verschwenkt, wobei der auf den Walzen gelagerte Behälter wieder angehoben und dann von den Förderbändern weitergeleitet wird.

Aus der EP 1 167 247 B1, die den Oberbegriff des Anspruchs 1 bildet, ist eine Einrichtung bekannt, bei der die Transportbänder für die Translationsbewegung in die Walzen für die Rotationsbewegung des Behälters integriert sind , so dass während der Rotationsbewegung der Walzen die Förderbänder mitbewegt werden.

Bei den bekannten Förder- und Dreheinheiten für Behälter wie Flaschen oder Dosen ist jedoch der Aufbau aufwendig und kompliziert. Insbesondere der Mechanismus zum Verkippen der Förderer ist mechanisch aufwendig konstruiert und im Dauerbetrieb aufgrund von Verschleißerscheinungen sehr störanfällig. Auch die andere Lösung ist aufwendig, da diese Förderbänder mit den umlaufenden Umlenkrollen während der Rotationsbewegung der Walzen mitrotieren und daher kompliziert angetrieben sind.

Aufgabe der vorliegenden Erfindung ist es daher, eine Einheit für Behälter-Rücknahmeautomaten bereitzustellen, die sich durch einen einfacheren und stabileren mechanischen Aufbau auszeichnet und insgesamt kostengünstiger zu fertigen ist.

Diese Aufgabe wird gemäß der Erfindung bei der Einheit für Behälter-Rücknahmeautomaten dadurch gelöst, dass die Walzen als Hohlkörper ausgebildet sind und zumindest einen Durchbruch in Längsrichtung aufweisen. In den Walzen ist jeweils zumindest eine Fördereinrichtung angeordnet, wobei das Förderband im Bereich des Durchbruchs angeordnet ist. Die Rotationswalzen und die Fördereinrichtung sind getrennt gelagert, wobei bei der Drehung der Rotationswalzen die Mantelfläche der Walzen das Förderband der Fördereinrichtung übergreift.

Die erfindungsgemäße Lösung hat den Vorteil, dass durch die Ausbildung der Walzen als Hohlkörper und die Integration einer Fördervorrichtung in den Hohlraum der Rotationswalzen eine kompakte und baulich einfache Einheit geschaffen worden ist. Die Walzen für die Rotation des Behälters und die Fördervorrichtung für den transversalen Transport des Behälters sind unabhängig voneinander ansteuerbar, so dass beim Drehen der Walzen die Fördereinrichtung nicht mitbewegt wird. Im Unterschied zu einer vollständigen Integration des Förderbandes in einer Drehwalze kann der Antriebsmotor bei der erfindungsgemäßen Lösung auf einfache Weise außerhalb der Rotationswalzen angebracht werden. Die Anordnung hat den Vorteil, dass die Position des Förderbandes fixiert ist und sich während der Rotationsbewegung der Walzen nicht ändert. Außer den Antriebsmotoren für die Walzen und die Förderbänder sind keine zusätzlichen Motoren für die Kipp- oder Schwenkbewegungen erforderlich. Da nur ein Motor für die Bewegung der Förderbänder erforderlich ist, kann eine Synchronisierung der Bewegung beider Förderbänder sichergestellt werden. Der Behälter wird in der Transportstellung von den Förderbändern transportiert. Werden die Walzen gedreht, so wird die Flasche durch die Mantelflächen der Walzen gering angehoben und von den Walzen gedreht, so dass ein über den Walzen angeordneter Detektor ein auf dem Behälter angebrachtes Identifikationsmerkmal erfassen kann. Insgesamt ist die Einheit sehr service- und wartungsfreundlich, da die einzelnen Komponenten leicht zugänglich sind.

Gemäß einem weiteren Aspekt der Erfindung wird ein Verfahren zur Handhabung von Behältern in liegender Stellung nach Anspruch 13 angegeben.

Aus der WO 98/02853 ist eine Vorrichtung bekannt, bei der ein V-förmiger Förderer Flüssigkeitsbehälter liegend transportiert. Mit Hilfe einer Detektoreinheit werden charakteristische Merkmale des Behälters, wie z.B. die Kontur oder ein Identifikationscode erfasst. Mit Hilfe des V-förmigen Förderers können eingegebene Behälter wieder in die vorgeordnete Position oder Beschickungsposition zurückgeführt werden. Oberhalb des Förderers sind Rotationswalzen mit ortsbeweglichen Drehlagern angeordnet, die unter Abstandsveränderung seitlich aufeinander zu und voneinander weg bewegbar sind. Bei der Bewegung mit Abstandsverringerung wird ein Behälter vom Förderer hochgehoben und gedreht, so dass ein Identifikationscode von der Detektoreinheit gelesen werden kann. Werden die Rotationswalzen auseinander bewegt, so fallen sie auf den V-förmigen Förderer herab und können von dort in Richtung der Längsachse der Behälter weiter transportiert werden. Diese Vorrichtung benötigt einen aufwendigen Bewegungsmechanismus zum seitlichen Bewegen der Rotationswalzen und hierfür den erforderlichen Bauraum und Bewegungsraum, was die Baugröße der gesamten Vorrichtung und auch ihre Stabilität negativ beeinflusst.

Bei dem Verfahren nach dem Dokument WO 02/12095 A1 können zwei Förderer mit zugehörigen Förderbändern zwei Stellungen einnehmen. In einer ersten Stellung, in der die Förderbänder eine V-Form bilden, liegt der Behälter auf den Förderbändern auf. Aus dieser Stellung werden die Förderer und die zugehörigen Förderbänder auseinanderbewegt, so dass in der dann eingenommenen zweiten Stellung Raum freigegeben wird für unterhalb der Förderbänder angeordnete Rotationswalzen mit ortsfesten Drehlagern. Der Behälter fällt infolge seiner Gewichtskraft nach unten auf diese Rotationswalzen und wird durch diese gedreht, um mit Hilfe eines Codelesers den auf den Behälter angebrachten Identifikatikonscode lesen zu können. Anschließend werden die Förderer mit den Förderbändern wieder in die erste Stellung verschwenkt, wodurch der Behälter von den Rotationswalzen hochgehoben wird. Er kann dann in Richtung seiner Längsachse weiter gefördert werden. Die seitliche Bewegung der Förderbänder erfordert einen aufwendigen Bewegungsmechanismus und einen zugehörigen großen Bauraum.

Die WO 02/12095 A1 sowie die DE-A-201 12 651 beschreiben weiterhin eine Vorrichtung zur Handhabung von Flüssigkeitsbehältern. Diese Vorrichtung soll mechanisch einfach aufgebaut sein und die Prüfung von Dosen oder Flaschen mit beliebigem oder wesentlich unterschiedlichem Querschnitt ermöglichen. Solche Behälterformen können charakteristische Merkmale und Konturen aufweisen, die erst bei Drehung des Behälters von einem bestimmten Erfassungswinkel einer Detektoreinheit aus erkennbar werden. Daher erfasst die Detektoreinheit charakteristische Merkmale des Behälters, wie z.B. der Kontur, des Identifikationscodes oder ähnlichem, während der Drehung des Behälters. Auch bei dieser Vorrichtung sind Mittel vorgesehen, um die beiden Förderbänder aus einer ersten Stellung, in welcher sie den Behälter stützen, seitlich auseinander in eine zweite Stellung zu bewegen, so dass im Zwischenraum zwischen den Förderbändern ein Paar Rotationswalzen mit ortsfesten Drehlagern zum Vorschein kommt. Der Behälter fällt auf diese Rotationswalzen herab und es erfolgt dann während der Drehung des Behälters das Erfassen seiner charakteristischen Merkmale mit Hilfe der Detektoreinheit. Auch diese Vorrichtung benötigt einen aufwendigen Bewegungsmechanismus für die seitliche Bewegung der Förderbänder und den zugehörigen Bauraum.

Es ist Aufgabe der Erfindung, ein Verfahren und Vorrichtungen anzugeben, die im Betrieb eine hohe Zuverlässigkeit bieten, konstruktiv eine kompakte Bauform ermöglichen sowie insgesamt service- und wartungsfreundlicher sind.

Bei der Lösung nach dem Verfahrensanspruch 13 wird im Unterschied zum Stand der Technik ein neuer Weg eingeschlagen. Die Rotationswalzen sind als Hohlkörper ausgebildet und haben ortsfest angeordnete Drehlager. Die Rotationswalzen können beispielsweise in Drehlagern gelagert sein, die starr mit dem Gehäuse eines Rückgabeautomaten verbunden sind. Die relative Lage der Drehachsen der Rotationswalzen zueinander verändert sich während des Betriebs nicht. Weiterhin ist innerhalb einer jeden Rotationswalze der Förderer ortsfest angeordnet. Das zugehörige Fördergestell, welches das Förderband trägt, kann beispielsweise starr mit dem Gehäuse des Rückgabeautomaten verbunden sein. Die Förderbänder der beiden Förderer bilden miteinander eine V-Form. Während des Betriebs ändern die Förderer ihre relative Lage zueinander, anders als bei dem Gegenstand nach der WO 02/12095 A1, nicht, d.h. die V-Form wird während des gesamten Betriebs beibehalten. Demgemäß wird ein zusätzlicher Bewegungsmechanismus zum Verschwenken der Förderbänder (wie bei der WO 02/12095 A1) oder ein zusätzlicher Bewegungsmechanismus zum Verschwenken der Rotationswalzen (wie bei der WO 98/02853 A1) nicht benötigt. Daher kann der Antriebsmotor bei der erfindungsgemäßen Lösung auf einfache Weise außerhalb der Rotationswalzen angebracht werden. Die Anordnung hat den Vorteil, dass die Position des Förderbandes fixiert ist und sich während der Rotationsbewegung der Walzen nicht ändert. Außer den Antriebsmotoren für die Walzen und die Förderbänder sind keine zusätzlichen Motoren für die Kipp- oder Schwenkbewegungen erforderlich. Da nur ein Motor für die Bewegung der Förderbänder erforderlich ist, kann eine Synchronisierung der Bewegung beider Förderbänder sichergestellt werden. Der technische Aufwand ist demgemäß bei dieser erfindungsgemäßen Lösung verringert und die mechanische Stabilität sowie die Betriebszuverlässigkeit verbessert. Jede Rotationswalze hat in ihrer Mantelfläche in Längsrichtung einen Durchbruch. In der ersten Stellung, in der der Behälter auf den Förderbändern aufliegt, ragt der Behälter mit seiner Umfangsfläche in den Innenraum der Rotationswalze. Bei Drehung der Rotationswalze übergreift die Mantelfläche das Förderband und deckt dieses schützend ab. Durch die Einbeziehung der Förderbänder in die Rotationswalzen und die Anordnung ortsfester Förderer und ortsfester Drehlager für die Rotationswalzen wird eine kleine, kompakte Bauform erreicht. Insgesamt ist die Einheit sehr service- und wartungsfreundlich, da die einzelnen Komponenten leicht erreichbar sind.

Die in Anspruch 14 beschriebenen Maßnahmen ermöglichen eine Beschleunigung des Identifikationsprozesses. Ein Drehen des Behälters kann entfallen, wenn der Identifikationscode bereits in der ersten Stellung erfassbar ist.

Weitere Einzelheiten der Erfindung ergeben sich aus der nachfolgenden Beschreibung und der Zeichnung.

In der Zeichnung zeigen:
- Fig. 1:: eine schematische Stirnansicht einer ersten Ausführungsform der erfindungsgemäßen Einheit für einen Rücknahmeautomaten für Behälter in der neutralen Position für den Transport des Behälters;

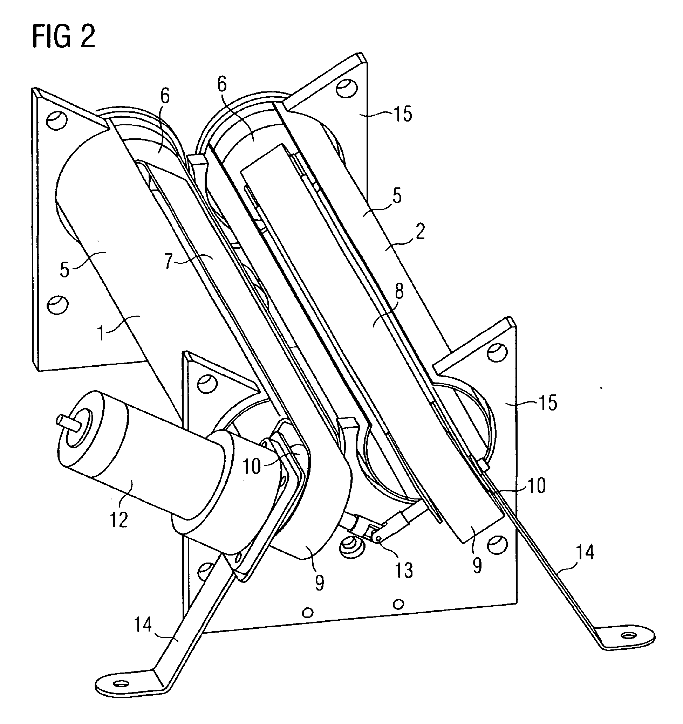

- Fig. 2:: eine Schrägansicht der Einheit aus Fig. 1;

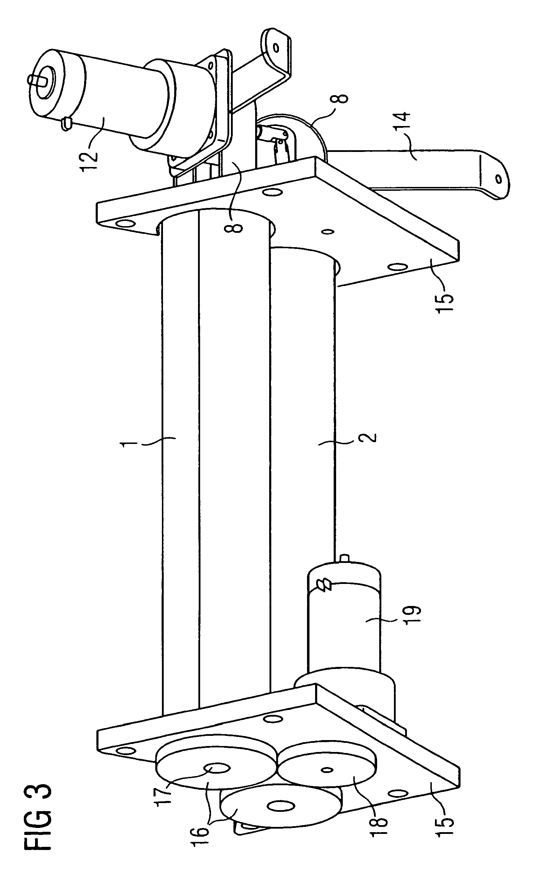

- Fig. 3:: eine Ansicht von unten der Einheit aus Fig. 1;
- Fig. 4:: eine Seitenansicht der Einheit aus Fig. 1 mit einem Flüssigkeitsbehälter;
- Fig. 5: eine rechte Schrägansicht einer zweiten Ausführungsform der Einheit;
- Fig. 6: eine linke Schrägansicht der Einheit aus Fig. 5.

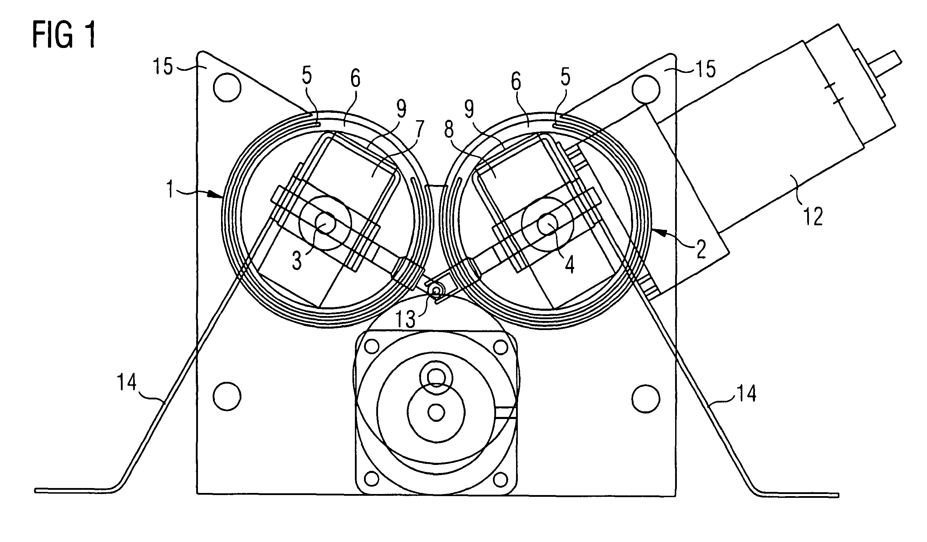

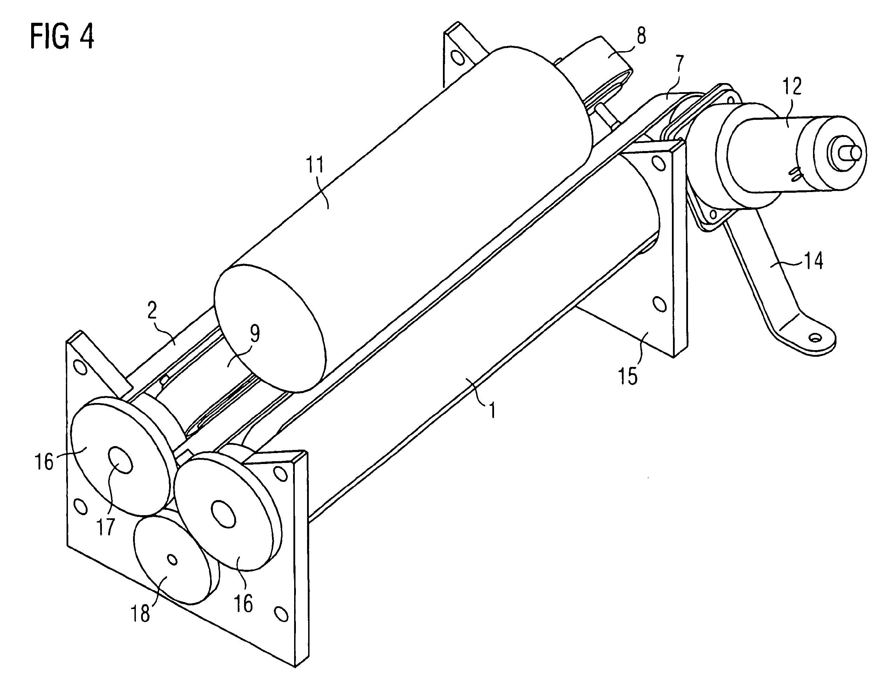

In Fig. 1 ist eine erfindungsgemäße Einheit für Behälter-Rücknahmeautomaten für den Transport und die Rotation von Behältern wie Flaschen und Dosen in liegender Stellung dargestellt. Eine solche Einheit befindet sich in einem Automaten zur Rückgabe von Behältern wie Glasflaschen, PET-Flaschen und Dosen. Die Behälter werden durch eine Eingabeöffnung im Gehäuse des Automaten, die hier nicht dargestellt ist, auf die Transporteinheit gelegt. Die Einheit besteht aus zwei Walzen 1 und 2, die um Achsen 3 und 4 drehbar sind. Die Walzen 1, 2 sind hohlförmig ausgebildet und weisen in ihrer Mantelfläche 5 jeweils einen Durchbruch 6 auf. In den Walzen 1, 2 ist jeweils eine Fördervorrichtung 7, 8 angeordnet. Die Fördervorrichtungen 7, 8 weisen jeweils ein Förderband 9 auf, das über Umlenkrollen 10 geführt wird. Die Fördervorrichtung 7, 8 ist derart in den Walzen 1,2 angeordnet, dass sich das Förderband 9 etwas unterhalb der Mantelfläche 5 der Walzen 5 im Bereich des Durchbruchs 6 befindet. In der Transportstellung, wie dies in Fig. 4 dargestellt ist, ruht ein Behälter 11 auf den Förderbändern 9 der Fördervorrichtungen 7, 8, die zueinander in einem Winkel von ca. 120 Grad und somit V-förmig angeordnet sind. Der Antrieb der Fördervorrichtungen 7, 8 erfolgt vorteilhafterweise durch einen gemeinsamen Elektromotor 12 und eine Kupplung 13. Über das Fördersystem 7, 8 kann ein Behälter in seiner Längsrichtung transportiert werden. Die Umlenkrollen 10 der Fördervorrichtungen 7, 8 sind an Stützen 14 befestigt, die fest mit einem im Behälter-Rücknahmeautomaten angeordneten Grundgestell verbunden sind, so dass die Position der Fördervorrichtungen 7, 8 fixiert ist.

Die Rotationswalzen 1,2 sind in einem an der Mantelfläche 5 angreifenden Lagergestell 15 drehbeweglich gelagert. Vorzugsweise sind die Rotationswalzen 1,2 zwischen zwei Lagergestellen 15 gelagert, um eine erhöhte Stabilität der Lagerung der Walzen 1, 2 zu erreichen. Vorteilhafterweise sind die Walzen 1, 2 an einer Stirnseite mit einem Zahnkranz 16 zum Antrieb der Walzen 1, 2 versehen. Die Lagerung der Walzen 1,2 an der Antriebsseite kann entweder ebenfalls durch das Lagergestell 15 oder aber durch eine Lagerung an der Zahnkranzachse 17 erfolgen. Über ein Zahnrad 18, das mit den beiden Zahnkränzen 16 der Walzen 1, 2 im Eingriff steht, können die Walzen 1, 2 in Rotation versetzt werden. Das Zahnrad 18 wird wiederum durch einen zweiten Motor 199 angetrieben. Insbesondere kann der Antriebsmotor 19 für den Antrieb der Walzen 1, 2 in einfacher Weise außerhalb der Walze angebracht werden. Werden die Rotationswalzen 1, 2 in Rotation versetzt, so bewegt sich die Mantelfläche 5 der Walzen 1, 2 über das Förderband 9 der jeweiligen Fördervorrichtung 7, 8 hinweg. Ein auf den Förderbändern 9 der Fördervorrichtung 7, 8 transportierter Behälter 11 wird durch die Mantelfläche 5 der Walze 1, 2 geringfügig angehoben und lagert nun auf den Manteloberflächen 5 der beiden Walzen 1,2. Durch die gleichsinnige Drehbewegung der Walzen 1, 2 wird nun der Behälter 11 in Rotation versetzt, so dass ein oberhalb der Walzen 1, 2 angeordneter Detektor wie ein Scanner - hier nicht dargestellt - ein an dem Behälter angebrachtes Identifikationsmerkmal wie beispielsweise einen Barcode oder eine andere optische Codierung erfassen kann, sobald das Merkmal in den Erfassungsbereich des Detektors kommt. Während der Rotationsbewegung der Walzen 1, 2 stehen vorteilhafterweise die Förderbänder 9 der Fördervorrichtungen 7, 8 still. Es ist jedoch auch denkbar, dass die Förderbänder 9 während der Drehbewegung der Walzen 1, 2 nicht angehalten werden. Da die Rotationswalzen 1, 2 und die Fördervorrichtungen 7, 8 voneinander unabhängig gelagert sind, ist die Drehbewegung der Walzen 1, 2 und die Bewegung der Förderbänder 9 der Fördervorrichtungen 7, 8 unabhängig voneinander durchführbar. Da die Fördervorrichtungen 7,8 nur von einem Motor angetrieben werden, ist eine Synchronisierung der Förderbewegung der Fördervorrichtungen 7,8 sichergestellt.

Durch den gemeinsamen Zugriff des Zahnrades 18 auf die beiden Zahnkränze 16 ist sichergestellt, dass die relative Stellung der Walzen 1, 2 im Hinblick auf den Durchbruch 6 parallel angesteuert werden kann. Nach einer vollen Umdrehung der Walzen 1, 2 befinden sich die Durchbrüche 6 der Walzen 1,2 wieder unmittelbar oberhalb des Förderbandes 9, so dass der Behälter 11 nach dem Stoppen der Drehbewegung wieder auf die Förderbänder 9 der Fördervorrichtungen 7, 8 sinkt. In Abhängigkeit vom Behälterdurchmesser ist gegebenenfalls eine zwei- oder mehrfache Drehung der Walzen 1, 2 erforderlich, um ein Identifikationsmerkmal an dem Behälter 11 erkennen zu können. Die Förderbänder 9 werden wieder in Bewegung versetzt und der Behälter 11 wird weitertransportiert. Wurde durch den Detektor festgestellt, dass es sich um einen Behälter 11 handelt, für den ein Pfand auszahlbar ist, so wird der Behälter 11 an einen der Transportvorrichtung nachgeordneten Ort geführt. Wird hingegen festgestellt, dass es sich um einen Behälter 11 handelt, für den kein Pfand ausgezahlt wird, so wird der Behälter 11 von der Transportvorrichtung wieder in Richtung des Eingabebereichs transportiert.

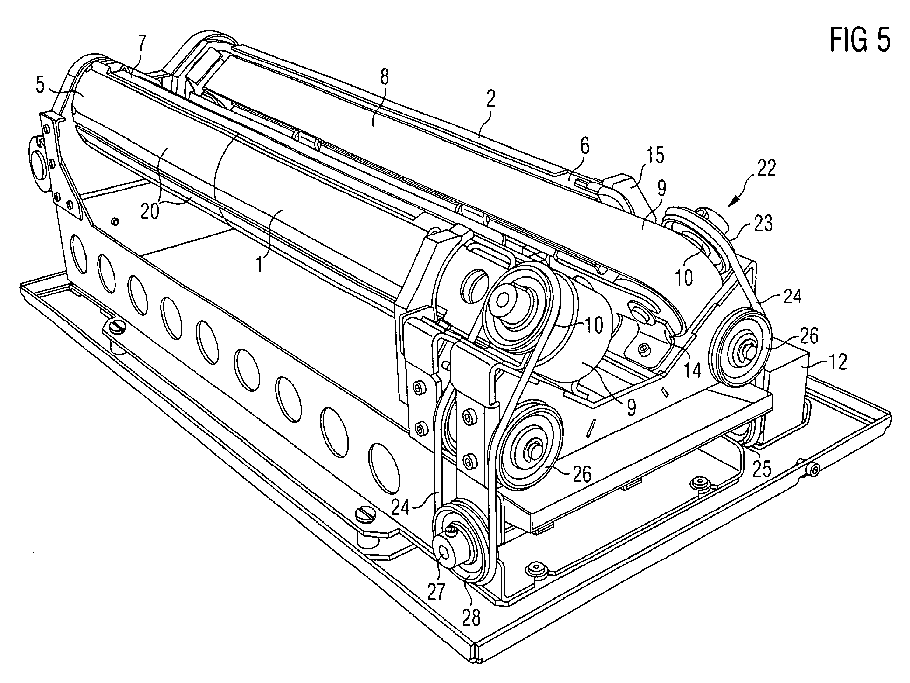

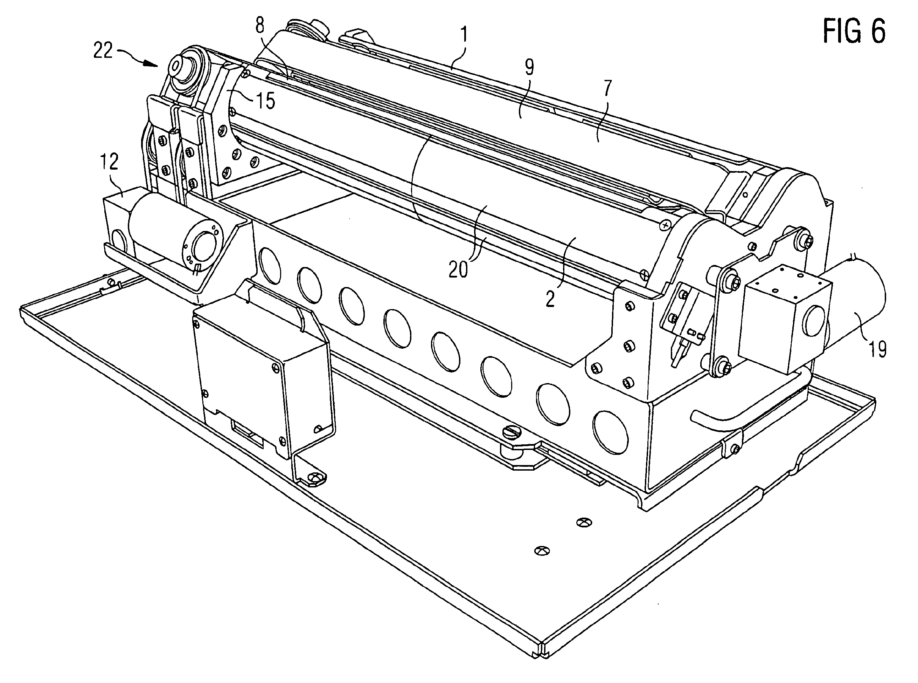

In einer weiteren Ausführungsform, die in den Fig. 5 und 6 dargestellt ist, sind die Walzen 1,2 nicht aus einem Rohr gefertigt, sondern bestehen aus einzelnen streifenförmigen Segmenten 20, die in Längsrichtung der Walzen 1,2 angeordnet sind und die Mantelfläche 5 der Walzen 1,2 ausbilden. Die Segmente 20 sind im wesentlichen kreisförmig gebogen, so dass sie Teilstücke der zylinderförmigen Mantelfläche 5 ausbilden. Die Segmente 20 sind an den beiden Enden jeweils auf ringförmigen Stützkörpern 21 aufgeschraubt. Hierdurch wird eine fertigungstechnisch einfachere Herstellung der Walzen 1,2 ermöglicht. Des weiteren kann vorgesehen sein, die Mantelfläche 5 der Walzen 1,2 mit einer Beschichtung zu versehen, um den Reibschluss zwischen den Walzen 1,2 und dem Behälter 11 zu beeinflussen sowie um Laufgeräusche der Flasche während der Rotation abzumildern.

Darüber hinaus ist in dieser Ausführungsform vorgesehen, die Umlenkrollen 10 der Förderbänder 9 mittels eines gekoppelten Riemenantriebs 22 anzutreiben und hierdurch eine synchrone Bewegung der Förderbänder 9 zu ermöglichen. Die Umlenkrollen 10 der Fördervorrichtung 7,8 sind mit einer Nut 23 für die Riemen 24 versehen. Die Riemen 24 umgreifen eine am Motor 12 angeordnete Umlenkscheibe 25 und werden von zwei weiteren Umlenkrollen 26 geführt. Eine Welle 27 verbindet die Umlenkscheibe 25 mit einer Umlenkscheibe 28 für den Antrieb der zweiten Fördervorrichtung 7. Ein gekoppelter Riemenantrieb 22 hat gegenüber einer Kupplung 13 den Vorteil, dass er weniger störanfällig ist und somit für den Dauerbetrieb besser geeignet ist. Die Räder und Riemen des Riemenantriebs 22 liegen zudem in einem Bereich, der weniger schmutzanfällig ist als der Zwischenbereich zwischen den Walzen 1,2, da hier durch die mit Restflüssigkeit gefüllten Flaschen Verschmutzungen durch austretende Flüssigkeit auftreten können.

## Patentansprüche

1. Einheit für Behälter-Rücknahmeautomaten für die Rückgabe von Behältern in liegender Position, insbesondere Flaschen oder Dosen, mit einer Fördervorrichtung (7, 8) mit einem Förderband (9) zum Transport der Behälter in Richtung ihrer Längsachse, und mit Rotationswalzen (1, 2) mit einer Mantelfläche (5), die aus einer neutralen Position in eine Identifizierungsposition überführbar sind, in der sie den Behälter außer Eingriff mit der Fördervorrichtung (7, 8) bringen und ihn in Drehung versetzen, wobei die Walzen (1, 2) jeweils als Hohlkörper ausgebildet sind und zumindest einen Durchbruch (6) in Längsrichtung aufweisen, und in den Walzen (1, 2) jeweils zumindest eine Fördereinrichtung (7, 8) angeordnet ist und das Förderband (9) im Bereich des Durchbruchs (6) angeordnet ist, **dadurch gekennzeichnet, dass** die Rotationswalzen (1, 2) und die Fördereinrichtung (7,8) getrennt gelagert sind, wobei bei der Drehung der Rotationswalzen (1, 2) die Mantelfläche (5) der Walzen (1,2) das Förderband (9) der Fördereinrichtung (7, 8) übergreifen.

2. Einheit nach Anspruch 1, **dadurch gekennzeichnet, dass** die Förderbänder (9) der Fördervorrichtungen (7,8) V-förmig angeordnet sind.

3. Einheit nach Anspruch 1 oder 2, **dadurch gekennzeichnet, dass** das Förderband (9) über Umlenkrollen (10) geführt ist, die an Stützen (14) angelenkt sind.

4. Einheit nach einem der vorhergehenden Ansprüche, **dadurch gekennzeichnet, dass** die Rotationswalzen (1, 2) an ihrer Stirnseite mit einem Zahnkranz (16) versehen sind, die von einem Zahnrad (18) angetrieben werden.

5. Einheit nach Anspruch 4, **dadurch gekennzeichnet, dass** das Zahnrad (18) von einem Motor (19) angetrieben wird.

6. Einheit nach einem der vorangehenden Ansprüche, **dadurch gekennzeichnet, dass** die Walzen (1, 2) aus einer neutralen Position, in der die Durchbrüche (6) sich oberhalb der Förderbänder (9) befinden und die Förderbänder (9) eine V-förmige Rinne zur Aufnahme und zum Transport des Behälters (11) bilden, beim gleichsinnigen Drehen um ihre Achse (3, 4) in eine ldentifizierungsposition überführbar sind, in der der Behälter (11) von den Förderbändern (9) freikommt und auf die rotierenden Mantelflächen (5) der Walzen (1, 2) gelangt und dort gedreht wird.

7. Einheit nach einem der vorangehenden Ansprüche, **gekennzeichnet durch** eine Detektoreinheit zum Erfassen eines Identifikationsmerkmals des Behälters (11) während der Drehung des Behälters (11) auf den Walzen (1, 2).

8. Einheit nach einem oder mehreren der vorangehenden Ansprüche, **dadurch gekennzeichnet, dass** die Rotationswalzen (1,2) aus streifenförmigen Segmenten (20) bestehen, die in Längsrichtung der Walzen (1,2) angeordnet sind.

9. Einheit nach Anspruch 8, **dadurch gekennzeichnet, dass** die Segmente (20) im wesentlichen kreisförmig gebogen sind.

10. Einheit nach einem oder mehreren der vorangehenden Ansprüche, **gekennzeichnet durch** einen gekoppelten Riemenantrieb (22) zum Antreiben der Förderbänder (9) der Fördervorrichtungen (7,8).

11. Einheit nach einem oder mehreren der vorangehenden Ansprüche, **dadurch gekennzeichnet, dass** die Mantelfläche (5) der Rotationswalzen (1,2) mit einer Beschichtung versehen ist.

12. Vorrichtung zur Rücknahme von Behältern mit einer Eingabeeinheit für die Rückgabe von Behältern in liegender Position, insbesondere Flaschen oder Dosen nach einem oder mehreren der Ansprüche 1 bis 11.

13. Verfahren zur Handhabung von Behältern in liegender Stellung, wie z.B. Dosen oder Flaschen, mit den folgenden Merkmalen:
- ein Behälter wird auf eine Fördereinrichtung gebracht, die einen ersten Förderer (7) und einen zweiten Förderer (8) mit jeweils einem Förderband (9) umfasst, wobei die Förderbänder (9) im wesentlichen eine V-Form bilden,
- die Kontur des Behälters wird mit Hilfe einer behälterdetektierenden Einheit erfasst,
- der Behälter wird aus einer ersten Stellung, in der er auf den Förderbändern (9) aufliegt, in eine zweite Stellung gebracht, in der er auf den Mantelflächen zweier Rotationswalzen (1, 2) aufliegt und von diesen gedreht wird, wobei die Drehlager (15) der Rotationswalzen (1, 2) in ihrer relativen Lage zueinander ortsfest angeordnet sind,
- ein Codeleser erfasst einen auf dem Behälter angebrachten Identifikationscode,
- abhängig vom Erfassen des Identifikationscodes wird der Behälter in der ersten Stellung entweder an einen den Förderern (7, 8) nachgeordneten Ort geführt,
- oder der Behälter wird in eine den Förderern (7, 8) vorgeordnete Postion oder Beschickungsposition zurückgeführt,
**dadurch gekennzeichnet,**
- **dass** bei Drehung der Rotationswalzen (1, 2) die jeweiligen Mantelflächen der Rotationswalzen (1, 2) die Förderbänder (9) übergreifen und den Behälter von den Förderbändern (9) anheben und ihn drehen, wobei
- die Rotationswalzen (1, 2) jeweils als Hohlkörper ausgebildet sind und in der Mantelfläche (5) in Längsrichtung einen Durchbruch (6) enthalten, und
- der erste Förderer (7) und der zweite Förderer (8) im Inneren der Rotationswalzen (1, 2) und in ihrer relativen Lage zueinander ortsfest angeordnet sind.

14. Verfahren nach Anspruch 13, **dadurch gekennzeichnet,**
- **dass** eine Prüfeinrichtung prüft, ob an dem Behälter in der ersten Stellung ein Identifikationscode erfassbar ist oder nicht,
- **dass** der Behälter, wenn der Identifikationscode erfassbar ist, an den den Förderern (7, 8) nachgeordneten Ort oder in die Beschickungsposition gefördert wird,
- und **dass** der Behälter, wenn der Identifikationscode nicht erfassbar ist, in die zweite Stellung gebracht wird und das Drehen des Behälters zum Erfassen des Identifikationscodes erfolgt, und wobei anschließend der Behälter wieder in die erste Position gebracht wird.

## Claims

1. Unit for automatic container recycling apparatuses for returning containers in a lying position, particularly bottles or cans, by means of a conveying device (7, 8) with a conveyor belt (9) for advancing the containers in the direction of the longitudinal axis thereof, and with rotating rollers (1, 2) that are provided with a surface area (5) and can be moved from a neutral position into an identifying position in which the rotating rollers disengage the container from the conveying device (7, 8) and make the container rotate, wherein the rotating rollers (1, 2) are each embodied as hollow elements and are provided with at least one breakthrough (6) in the longitudinal direction, and at least one conveying device (7, 8) is disposed in the rollers (1, 2), respectively, and the conveyor belt (9) is arranged in the area of the breakthrough (6), **characterized in that** the rotating rollers (1, 2) and the conveying device (7, 8) are mounted separately, the surface area (5) of the rollers (1, 2) overlapping the conveyor belt (9) of the conveying device (7, 8) when the rotating rollers (1, 2) are rotated.

2. Unit according to claim 1, **characterized in that** the conveyor belts (9) of the conveying devices (7, 8) are arranged in v-shape.

3. Unit according to claim 1 or 2, **characterized in that** the conveyor belt (9) is guided around turn around rollers (10) that are attached to supports (14).

4. Unit according to one of the foregoing claims, **characterized in that** the rotating rollers (1, 2) are provided with a gear rim (16) on the front side thereof which are driven by a gear wheel (18).

5. Unit according to claim 4, **characterized in that** the gear wheel (18) is driven by a motor (19).

6. Unit according to one of the foregoing claims, **characterized in that** the rollers (1, 2) can be moved from a neutral position, in which the breakthroughs (6) are located directly above the conveyor belts (9) with the conveyor belts (9) forming a v-shaped groove for receiving and advancing the container (11), into an identifying position when rotating in the same direction around the axis (3, 4) thereof, in which identifying position the container (11) is released from the conveyor belts (9), arrives on the rotating surface areas (5) of the rollers (1, 2) and is rotated here.

7. Unit according to one of the foregoing claims, **characterized by** a detection unit for detecting an identification feature of the container (11) during rotation of the container (11) on the rollers (1, 2).

8. Unit according to one or several of the foregoing claims, **characterized in that** the rotating rollers (1, 2) are made of lamellar segments (20) disposed in the longitudinal direction of the rollers (1, 2).

9. Unit according to claim 8, **characterized in that** the segments (20) are substantially bent circularly.

10. Unit according to one or several of the foregoing claims, **characterized by** a coupled belt drive (22) for driving the conveyor belts (9) of the conveying devices (7, 8).

11. Unit according to one or several of the foregoing claims, **characterized in that** the surface area (5) of the rotating rollers (1, 2) is provided with a coating.

12. Apparatus for recycling containers with an inlet unit for returning containers in a lying position, particularly bottles or cans according to one or several of claims 1 to 11.

13. Method for handling containers in a lying position, such as cans or bottles, having the following features:
- a container is laid on a conveying device comprising a first conveyor (7) and a second conveyor (8) each having one conveyor belt (9), wherein the conveyor belts (9) substantially form a v-shape,
- the contour of the container is detected by means of a container detecting unit,
- the container is moved from a first position, lying on the conveyor belts (9), into a second position, lying on the surface areas of two rotating rollers (1, 2) and being rotated by them, wherein the bearings (15) of the rotating rollers (1, 2) are arranged stationarily in the relative position to one another,
- a code reader detects an identification code located on the container,
- depending on the detection of the identification code, the container in the first position is either guided to a place located upstream of the conveyors (7, 8),
- or the container is transported back to a position located downstream of the conveyors (7, 8) or a loading position,
**characterized in that**
- the respective surface areas of the rotating rollers (1, 2) overlap the conveyor belts (9), lifting the container from the conveyor belts (9) and rotating it when the rotating rollers (1, 2) are rotated, wherein
- the rotating rollers (1, 2) are each embodied as hollow elements and are provided with a breakthrough (6) in the longitudinal direction in the surface area (5), and
- the first conveyor (7) and the second conveyor (8) are arranged inside the rotating rollers (1, 2) and are stationary in the relative position to one another.

14. Method according to claim 13, **characterized in that**
- a testing device determines whether or not an identification code is detectable on the container in the first position,
- the container is conveyed to the place located upstream of the conveyors (7, 8) or to the loading position if the identification code is detectable,
- the container is moved into the second position if the identification code is not detectable, and the container is rotated for detecting the identification code, and wherein the container is then moved back into the first position.

## Revendications

1. Unité pour automate de recyclage de récipients destiné à renvoyer des récipients en position couchée, notamment des bouteilles ou des boîtes, ladite unité comportant un dispositif de transport (7, 8) comprenant une bande transporteuse (9) pour le transport des récipients dans la direction de leur axe longitudinal, et des rouleaux de rotation (1, 2) présentant une surface d'enveloppe (5), qui peuvent être amenés d'une position neutre dans une position d'identification dans laquelle ils amènent le récipient hors engagement d'avec le dispositif de transport (7, 8) et le déplacent en rotation, les rouleaux (1, 2) étant chacun conformés en corps creux et comportant au moins un passage (6) ménagé dans la direction longitudinale, et au moins un dispositif de transport (7, 8) étant disposé dans chacun des rouleaux (1, 2) et la bande transporteuse (9) étant disposée dans la zone du passage (6), **caractérisée en ce que** les rouleaux de rotation (1, 2) et le dispositif de transport (7, 8) sont montés séparément, la surface d'enveloppe (5) des rouleaux (1, 2) chevauchant la bande transporteuse (9) du dispositif de transport (7, 8) pendant la rotation des rouleaux de rotation (1, 2).

2. Unité selon la revendication 1, **caractérisée en ce que** les bandes de transport (9) des dispositifs de transport (7, 8) sont disposées en V.

3. Unité selon la revendication 1 ou 2, **caractérisée en ce que** la bande transporteuse (9) est guidée par des rouleaux de renvoi (10) qui sont articulés sur des supports (14).

4. Unité selon l'une des revendications précédentes, **caractérisée en ce que** les rouleaux de rotation (1, 2) sont dotés, du côté frontal, d'une couronne dentée (16) qui est entraînée par une roue dentée (18).

5. Unité selon la revendication 4, **caractérisée en ce que** la roue dentée (18) est entraînée par un moteur(19).

6. Unité selon l'une des revendications précédentes, **caractérisée en ce que**, lorsqu'ils tournent dans le même sens autour de leur axe (3, 4), les rouleaux (1, 2) peuvent être amenés d'une position neutre, dans laquelle les passages (6) se trouvent au-dessus des bandes transporteuses (9) et les bandes transporteuses (9) forment une goulotte en V destinée à recevoir et transporter le récipient (11), dans une position d'identification dans laquelle le récipient (11) est libéré des bandes transporteuses (9) et arrivent sur les surfaces d'enveloppe (5) en rotation des rouleaux (1, 2) qui le font tourner.

7. Unité selon l'une des revendications précédentes, **caractérisée par** une unité de détection destinée à détecter une caractéristique d'identification du récipient (11) pendant la rotation du récipient (11) sur les rouleaux (1, 2).

8. Unité selon l'une ou plusieurs des revendications précédentes, **caractérisée en ce que** les rouleaux de rotation (1, 2) sont constitués de segments (20) en forme de bandes qui sont disposés dans la direction longitudinale des rouleaux (1, 2).

9. Unité selon la revendication 8, **caractérisée en ce que** les segments (20) présentent une courbure sensiblement circulaire.

10. Unité selon l'une ou plusieurs des revendications précédentes, **caractérisée par** un entraînement à couplage par courroie (22) destiné à entraîner les bandes transporteuses (9) des dispositifs de transport (7, 8).

11. Unité selon l'une ou plusieurs des revendications précédentes, **caractérisée en ce que** la surface d'enveloppe (5) des rouleaux de rotation (1, 2) est dotée d'un revêtement.

12. Dispositif de recyclage de récipients, comportant une unité d'entrée pour le renvoi de récipients en position couchée, notamment des bouteilles ou des boîtes, selon l'une ou plusieurs des revendications 1 à 11.

13. Procédé de manipulation de récipients en position couchée, comme par exemple des boîtes ou des bouteilles, lequel procédé présente les caractéristiques suivantes :
- un récipient est amené sur un dispositif de transport qui comporte un premier transporteur (7) et un deuxième transporteur (8) comprenant chacun une bande transporteuse (9), les bandes transporteuses (9) formant un agencement ayant sensiblement la forme d'un V,
- le contour du récipient est détecté à l'aide d'une unité de détection de récipient,
- le récipient est amené d'une première position, dans laquelle il repose sur les bandes transporteuses (9), dans une deuxième position dans laquelle il repose sur les surfaces d'enveloppe de deux rouleaux de rotation (1, 2) qui le mettent en rotation, les paliers rotatifs (15) des rouleaux de rotation (1, 2) étant disposés de façon fixe dans leur position relative l'un par rapport à l'autre,
- un lecteur de code détecte un code d'identification placé sur le récipient,
- en fonction de la détection du code identification, ou bien le récipient est amené de la première position à un emplacement qui est en aval des transporteurs (7, 8),
- ou bien le récipient est ramené dans une position située en amont des transporteurs (7, 8), ou position de de chargement, **caractérisé en ce que** :
- lors de la rotation des rouleaux de rotation (1, 2), les surfaces d'enveloppe respectives des rouleaux de rotation (1, 2) chevauchent les bandes transporteuses (9) et soulèvent le récipient des bandes transporteuses (9) et le font tourner,
- les rouleaux de rotation (1, 2) sont conformés chacun en corps creux et comportent chacun un passage (6) ménagé longitudinalement dans la surface d'enveloppe (5), et
- le premier transporteur (7) et le deuxième transporteur (8) sont disposés à l'intérieur des rouleaux de rotation (1, 2) en étant fixes dans leur position relative l'un par rapport à l'autre.

14. Procédé selon la revendication 13, **caractérisé en ce que** :
- un dispositif de vérification vérifie si un code d'identification est détecté ou non sur le récipient dans la première position,
- lorsque le code d'identification peut être détecté, le récipient est transporté à l'emplacement situé en aval des transporteurs (7, 8) ou dans la position de chargement,
- et, lorsque le code d'identification ne peut pas être détecté, le récipient est amené dans la deuxième position, et la rotation du récipient est effectuée pour détecter le code d'identification, le récipient étant ramené ensuite dans la première position.
